# EUROPEAN PATENT APPLICATION

(11) **EP 1 054 235 A1**
(43) Date of publication of application: **22.11.2000**
(21) Application number: 98966438.8
(22) Date of filing: 02.12.1998
(51) Int. Cl.: G01C 21/12

(54) **METHOD FOR DETERMINING THE CO-ORDINATES OF A SATELLITE**

(71) Applicant: Samsung Electronics Co., Ltd., Suwon-city, Gyungki-do (KR)
(72) Inventor: ROG, Andrey L., Moscow, 107143 (RU); KAKOSHKINA, Natalia P., Saint-Petersburg, 195030 (RU); IVANOV, Vladimir N., Saint-Petersburg, 195297 (RU); TZEKHANOVICH, Guennady S., Saint-Petersburg, 198260 (RU); MALASHIN, Viktor I., Saint-Petersburg, 195273 (RU); PISAREV, Serguey B., Saint-Petersburg, 198152 (RU); POVERENNYI, Denis G., Saint-Petersburg, 195297 (RU); SHEBSHAEVICH, Boris V., Saint-Petersburg, 190121 (RU); SILIN, Mikhail Yu, Moscow, 105094 (RU)
(74) Representative: Neill, Alastair William
(86) International application number: PCT/RU98/00402
(87) International publication number: WO 00/33030

(57) **Abstract**

The invention relates to the field of radio navigation and, more specifically, it relates to methods of determining the current values of the orbital position of the artificial satellite of the Earth which is used in a satellite radio navigation system (SRNS), by the ephemeredes and can be used when performing the radio navigation measurements in the equipment of the consumers of the SRNS signals. The variants of a fast method for determining the coordinates of the satellite are proposed, which consist in that the satellite coordinates are determined at preset points of the orbit spaced from each other by a selected time interval, and further determining the velocities of the satellite at the nodal points, while at the points between the nodal points the satellite coordinate are determined in the geocentric inertial system of coordinates or in a system the Greenwich geocentric coordinates using special formulas or the Taylor polynomial of the second or third order, and determining these at the nodal points using the six-order Taylor polynomial.

## Description

### Technical field

The invention relates to the field of radio navigation and, more specifically, the invention relates to the methods for determining the current values of the orbital position of the artificial satellite of the Earth operating in a satellite radio navigation system (SRNS) by the ephemeredes, and can be used for performing the radio navigation measurements in the equipment of the users of the SRNS signals.

### Prior art

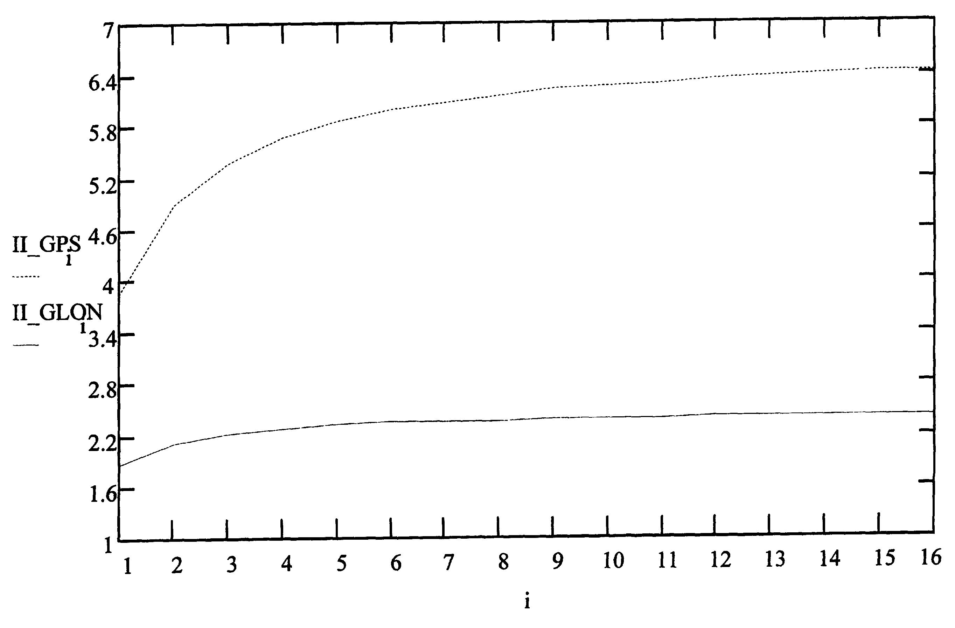

It is well known, that the navigational receivers in the equipment of the users of the SRNS and /or GLONASS signals, determine their coordinates and speed using the quasi-range and quasi-velocity measurements relative to the current position (coordinates) of the satellites on the orbit (cf. Network Satellite Radio Navigation Systems (V.S. Shebshaevich, P.P. Dmitriev, N.V. Ivantsevich et al., Moscow, Radio i Svyaz Publishers, 1993, pages 110-114, Fig.7.3) [1]. The current values of the coordinates of the satellites at the moments of measurements are calculated in the receiver. The calculation is based on the ephemeris data transmitted by each SRNS satellite. Since the ephemeredes of the satellite are the coordinate and the velocity and acceleration component resulted from the Sun and Moon attraction and are transmitted only during defined periods of time, all current (intermediate) coordinates of the satellite on its orbit are determined by means of prediction including extrapolation (see [1] pages 20-21, 29-31, 165-166, 171-173).

The known methods of determining the current orbital position (coordinates) of the SRNS satellite are based on the prediction (extrapolation) of the orbital motion stemming from the a priori known coordinates of the satellite on the orbit at a given instant of time and taking into account the known disturbing factors. The commonly known forms of representation of the orbital motion are temporal polynomials in the rectangular coordinates; harmonic approximations in the rectangular coordinates; temporal polynomials in elements; harmonic approximations in the elements (cf. [1], page 172).

The known methods of determination of the current coordinates of the SRNS satellite based on the prediction (extrapolation) of the orbital motion are characterized by a high cost of computational procedures (complex and costly processors are used) and a low speed of response.

The very simple method of calculations is based on the use of the orbit of the polynomial approximations in coordinates (cf. [1], page 172).

Known in the art is a more accurate but low-speed method based on the representation of the orbital motion as a harmonic approximation in the elements (cf. [1]) page 172-173). Also known in the art is an example of successive calculations of the orbital motion based on such a method, as applied to the SRNS GPS satellite (see, for example, GPS Navigation Message / A.J. Van Dierendonck, S.S.Russell, E.R.Kopitzke et al. // Navigation (USA). - 1978. Vol.25, # 2.- p.146-165) [2]. A specific feature of the method [2] is that the same algorithm of evaluations is used at any instant and since the calculations are made in a full scope at each instant of time, the speed of response of this method is also low.

A similar disadvantage may be found in the method recommended by the document "ICD GPS-200 " (cf. ICD Navstar GPS Space Segment/Navigation User Interface) [3] as a standard method of determining the current coordinates of the SRNS GSP satellite. In practice, the time of calculation of one point on the orbit is effected, on the average, in 1.850 ms.

As a prior art, a relevant method is chosen, described in the "Interface Control Document" instruction for the GLONASS system (cf. Global Navigational Satellite System - GLONASS. The interface control document of the KNITS VKS Research Institute, Russia 1995 [4] is recommended as a standard for determining the current coordinates of the satellite by the ephemeredes. In various embodiments of practical realization, the prior art method can use the Runge -Kutt technique of the fourth order for integration of the differential equations of motion of the satellite on along its orbit, extrapolation and construction of a predicted path. The calculation time in this method depends on the value of the extrapolation interval. For realization of the prior art method there can also be used a more cost-effective computational technique based on the six-order Taylor polynomial ensuring the accuracy required in the differential method of navigational determinations. The time of calculation by the Taylor polynomial (processor TMS320C203, language SI, the data with a fixed point only) is equal to 0.675 ms for one satellite.

The realization of the prior art method is rather complex in the computational aspect, especially in the case of using a simple inexpensive processor (for example, without hardware support of the operations with a floating point), when for the calculations might require inadmissibly long time. This is associated with the fact that the standard and rather complex algorithm of calculations is applied for any instant of time, i.e. for the calculation of all current points of orbital motion of the satellite.

### Disclosure of the invention

The claimed invention solves an engineering problem of reduction of the computing and time expenses when determining the path of the SRNS satellite, i.e. makes it possible to use relatively simple and inexpensive processors while reducing the time of calculations.

This task is attained by using a combined (two-step) process of determining the path of a satellite, when the standard algorithm is used for calculation of only definite nodal points of the path - once in a time interval, while the calculation of the intermediate points of the path within this interval is effected by means of a simplified procedure, i.e. using simple polynomial formulas whose coefficients are calculated at the first step of application of the standard computational algorithm.

The essence of the invention consists in that in the method of determining the coordinates of the SRNS satellite on the orbit by the ephemeredes, the a priori known ephemeredes are initially used for determining the extrapolated position of the satellite on its orbit at a series of arbitrary points with the help of the standard computational algorithm are used for determining the coordinates of the satellite only at some nodal points of the orbit spaced from each other by a selected time interval. In so doing the satellite velocity is determined at the additional nodal points, while at the intermediate points between the nodes the satellite position is determined using a simplified computational algorithm and the polynomial formulas, the coefficients for which are calculated by the coordinates and velocity of the satellite at the nodal points.
In the claimed method the coordinates and velocity of the SRNS GLONASS satellite at the orbit nodes are determined using the standard computational procedure and the six-order Taylor polynomial, while the satellite coordinates at the intermediate orbital points are determined using the Taylor polynomial of the second or third order.

### Brief description of the drawings

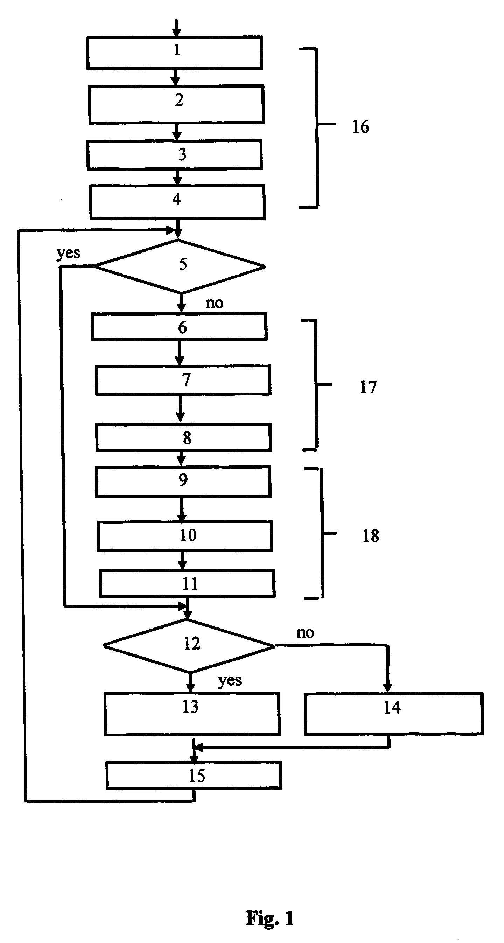

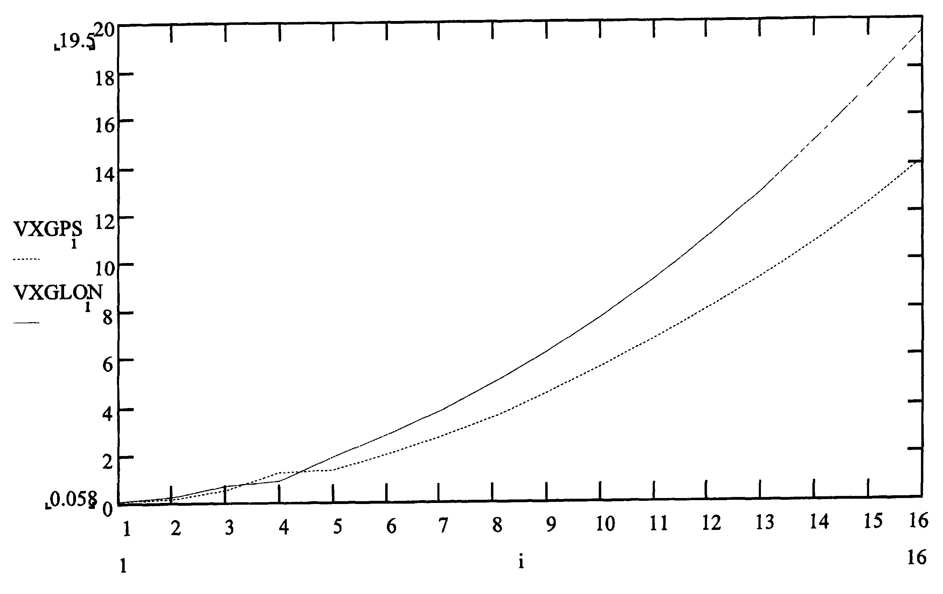

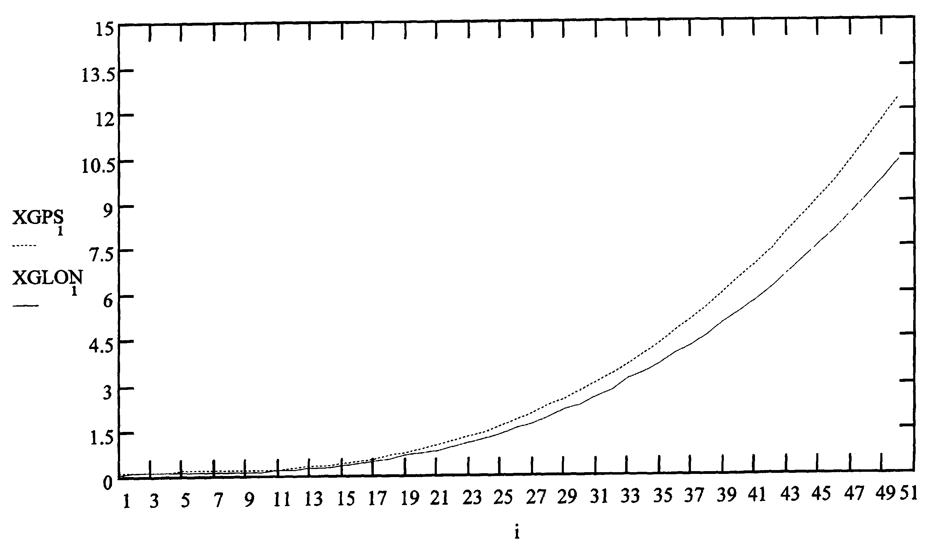

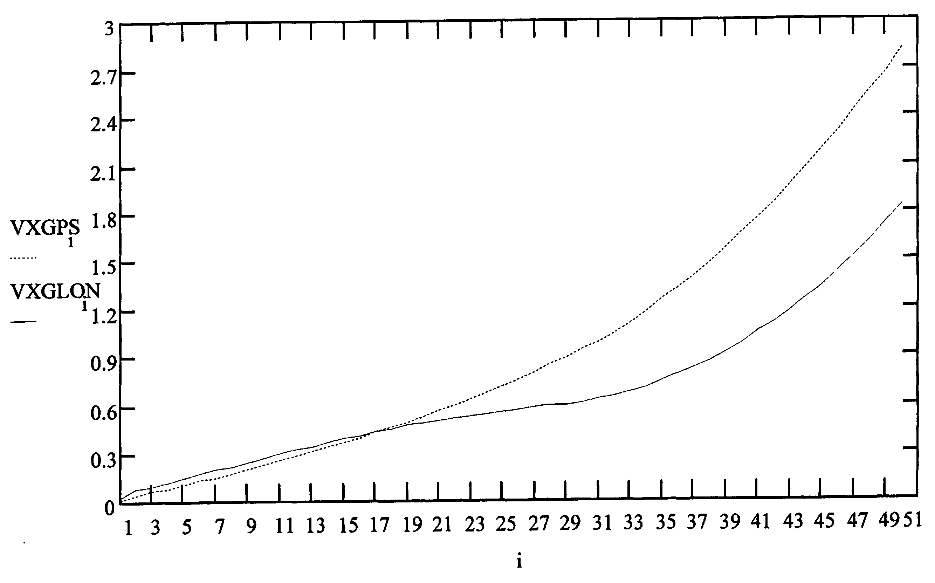

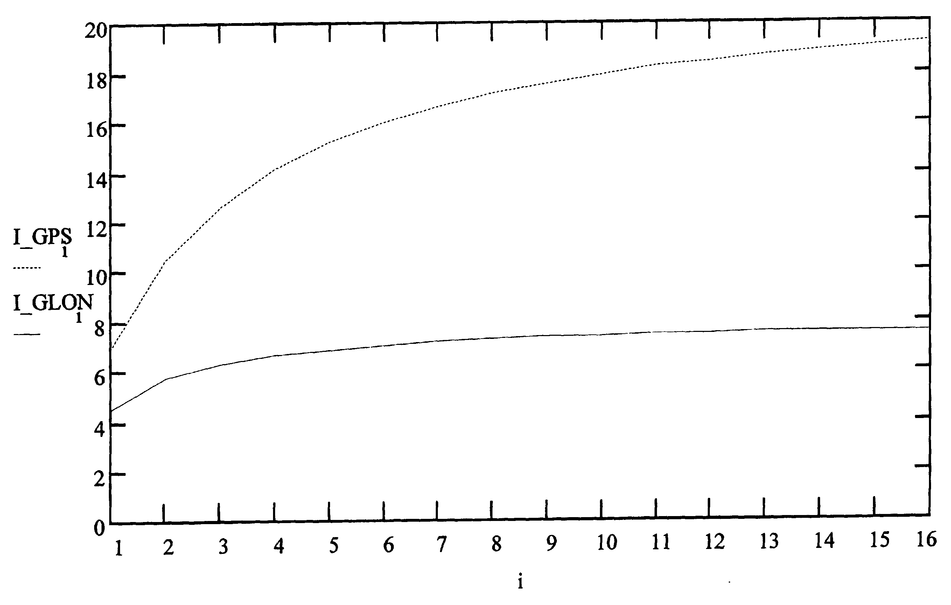

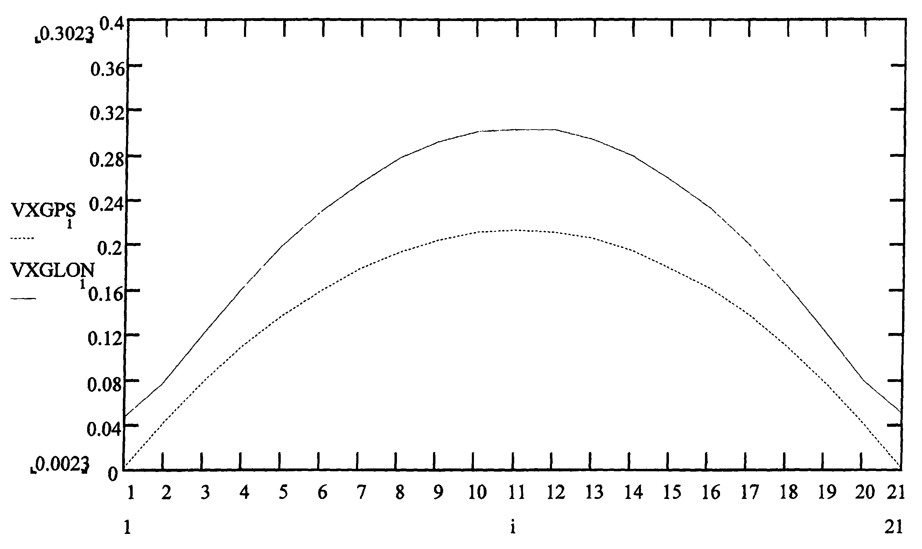

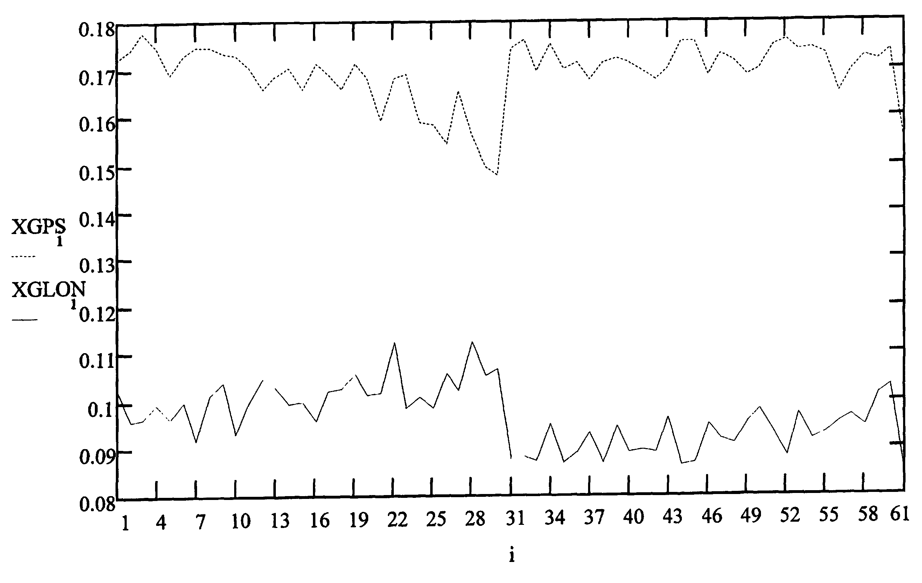

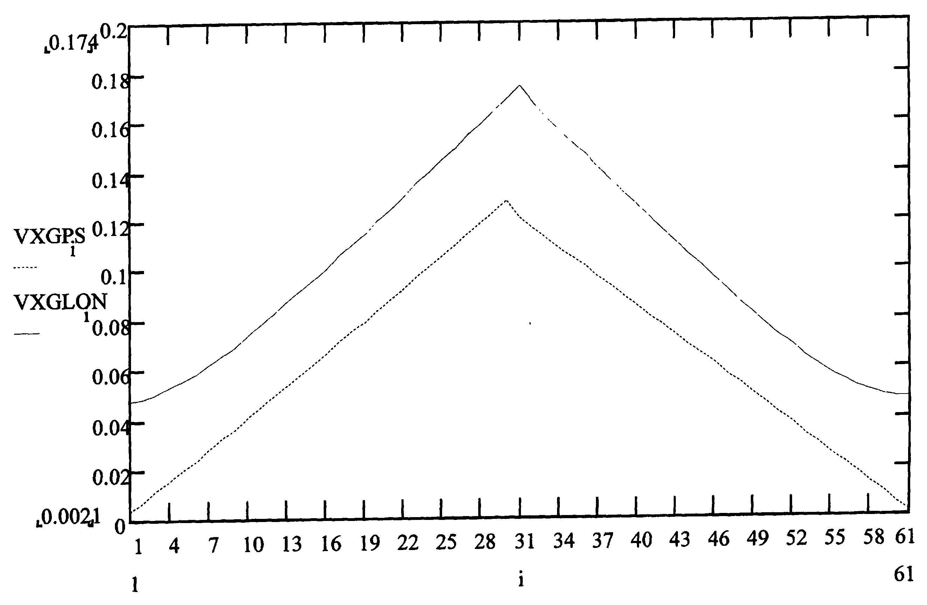

The essence of the claimed invention, a possibility of its realization and industrial application are illustrated in the block-diagram of the computational algorithm for calculation of the satellite coordinates on the orbit and the graphs presented in Figs. 1-11, in which:
Fig.1 is a block diagram of the algorithm for computing the satellite coordinates using the ephemeredes realized according to the claimed method. In so doing the following symbols are used:
   - 1 is ${\text{t = t}}_{\text{start}}$,${\text{t}}_{\text{y}} {\text{= t}}_{\text{ia}}$
   - 2 is the calculation of **X**ₛ by t_{y} using the standard method
   - 3 is the calculation of **V**ₛ by t_{y}
   - 4 is the calculation of the coefficients of the simplified algorithms
   - 5 is t_{y} - t > 0
   - 6 is ${\text{t}}_{\text{y-1}} {\text{= t}}_{\text{y}}$
   - 7 is 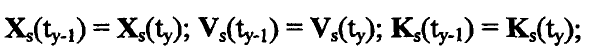
   - 8 is ${\text{t}}_{\text{y}} {\text{= t}}_{\text{y}} {\text{+ t}}_{\text{int}}$
   - 9 is the calculation of **X**ₛ by t_{y} using the standard method
   - 10 is the calculation of **V**ₛ by t_{y},
   - 11 is the calculation of the coefficients of the simplified algorithms
   - 12 is t_{y-1} < tₑᵢₒ/2
   - 13 is the calculation of **X**ₛ, **V**ₛ by t from the node t_{y-1} using the
      simple method
   - 14 is the calculation of **X**ₛ, **V**ₛ by t from the node t_{y} using the simple method
   - 15 is $\text{t = t + dt}$
   - 16 is the calculation of the coordinate and velocity at the initial instant of time
   - 17 is the redesignation of the node coordinates, velocity, time and the coefficients of the simplified algorithms
   - 18 is the calculation of the new node coordinates of the velocity, acceleration and the coefficients of the simplified algorithms.

   - Fig.2 shows the dependence of the maximum value of the mean square error of the coordinates (in meters - see the ordinate) on the interval length (in tens of second-order polynomial, the continuous line standing for the values XGLONᵢ and the dotted line standing for XGPSᵢ;
   - Fig.3 illustrates the dependence of the maximum value of the mean square error of the velocities (in centimeters per second - see the ordinate) on the interval length (in tens of seconds - see the. abscissa) for the simplified algorithm "I", the continuous line standing for VXGLONᵢ, and the dotted line standing for VXGPSᵢ;
   - Fig.4 illustrates the dependence of the maximum value of the mean square error of the coordinates (in meters - see the ordinate) for the simplified algorithm II of the third-order Taylor polynomial, the continuous line standing for VXGLONᵢ and the dotted line standing for VXGPSᵢ;
   - Fig.5 illustrates the dependence of the maximum value of the mean square error of the velocities (in centimeters per second - see the ordinate) on the interval length (in tens of seconds - see the abscissa) for the simplified algorithm II, the continuous line standing for VXGLONᵢ and the dotted line standing for VXGPSᵢ;
   - Fig.6 illustrates the ratio of the time required for the solution using the standard algorithm to the time spent for the solution using the simplified algorithm "I" depending on the time interval between the nodal points (in tens of seconds), the continuous line standing for the values of GLONᵢ and the dotted line standing for I_GPSᵢ,
   - Fig.7 illustrates the ratio of the time required for the solution using the simplified algorithm "II" to the time required for the solution by the standard algorithm depending on the time interval (in tens of seconds), the continuous line standing for the values of II_GLONᵢ and the dotted line standing for II_GPSᵢ,
   - Fig.8 illustrates the variation of the mean square error of the coordinates calculated by the simplified algorithm "I", within an interval of 20 seconds (in meters), the continuous line standing for the values XGLONᵢ and the dotted line standing for XGPSᵢ,
   - Fig.9 illustrates the variation of the mean square error of the coordinates calculated by the simplified algorithm "I", within an interval of 20 seconds (in meters), the continuous line standing for the values VXGLONᵢ and the dotted line standing for VXGPSᵢ,
   - Fig. 10 illustrates the variation of the mean square error of the coordinates calculated by the simplified algorithm "II", within an interval of 60 seconds (in meters), the continuous line standing for the values XGLONᵢ and the dotted line standing for XGPSᵢ,
   - Fig. 11 illustrates the variation of the mean square error of the coordinates calculated by the simplified algorithm "II", within an interval of 60 seconds (in centimeters per second), the continuous line standing for the values VXGLONᵢ and the dotted line standing for VXGPSᵢ.

### Preferable embodiment of the invention

According to the claimed method, the current points of the orbital position (coordinates) of the SRNS satellite are determined as shown in the block diagram of the computational algorithm (Fig. 1) illustrating an example of the successive steps and interconnection of the operations.

The calculation of the ephemeredes for each working satellite is effected by steps of 0.5-1.0 second in a time interval of 0,5 hour (the time of change of the ephemeredes for the satellite SRNS GLONASS satellite and of up to 1.0-2.0 hours for the SRNS GSP satellite.

The satellite coordinates are calculated in a time interval starting from some initial moment tₛₜₐᵣₜ. The first nodal point is assigned for an instant 1ₛₜₐᵣₜ, the next one for 1ₛₜₐᵣₜ + 1ᵢₙₜ. Using the a priori known ephemeredes at the initial instants of time (${\text{t = t}}_{\text{start}}$), the predicted position of the satellite on the orbit (the coordinates **X**ₛ and velocity speed **V**ₛ) at defined nodal points ($\text{t = ty}$) spaced one from another by a selected time interval.

The calculation of the satellite coordinates at the nodal points is effected using the standard (for each SRNS) computational algorithms, in particular, for the SRNS GLONASS satellite the six-order Taylor polynomial is used.

The position of the satellite at the intermediate points of the orbit selected between the nodal points is determined using the simplified computational algorithm and the polynomial formulas (algorithm "I" is the second-order polynomial, the algorithm "II" is the third-order Taylor polynomial whose coefficients are calculated at the step of previous application of the standard computational algorithm by the position and velocity of the satellite at the nodal points. The interval between the intermediate points is selected within a range of 0.5-1.0 second. The higher-order polynomials as possible simplified algorithms are not considered since they have no adequate computational efficiency.

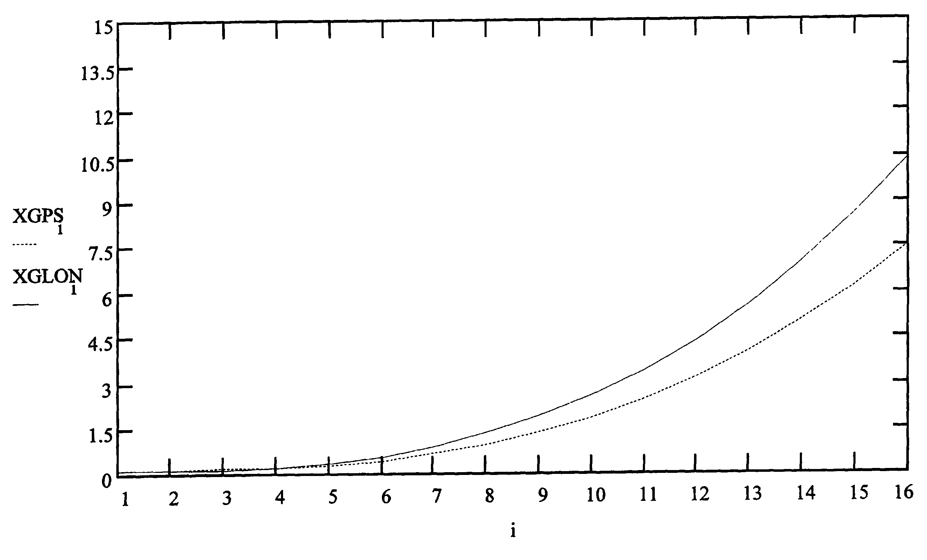

The comparison of the dependencies of the increased mean square errors and saving of time depending on the time interval length (See Figs. 2-7) allows us to select an acceptable length of the interval for concrete realization. As it is evident from the graphs of the time saving evaluation, they rather quickly approach the saturation limit and means square error grows with an increase of the interval length, therefore, the optimum intervals for the algorithm "I" are those of about 20... 60 seconds, and for the algorithm "II" - 60... 100 seconds.

The analysis has shown, that for the differential navigation the use of the algorithm "I" is acceptable (by the accuracy criterion) within a time interval of about 20 seconds, and of the algorithm "II" with a time interval of about 60 seconds. Time of prediction of the position of the satellite on its orbit calculated by the proposed simplified algorithms makes on the average (taking into account the periodic use of the complete standard method of prediction) 0.178 ms (by the algorithm "I") and 0.314 ms (by the algorithm "II") per second for the SRNS GPS satellite and 0.119 ms (by the algorithm "I") and 0.290 ms (by the algorithm "II") per second for the SRNS GLONASS satellite.

Taking into account that the prediction time of the satellite position on the orbit according to the standard algorithm is on the average 1.850 ms for the SRNS GPS satellite and 0.675 ms for the SRNS GLONASS satellite, it is clear that the use of the algorithm "I" reduces the computational time by almost one order of magnitude while the use of the algorithm "II" reduces this time by a factor of three.

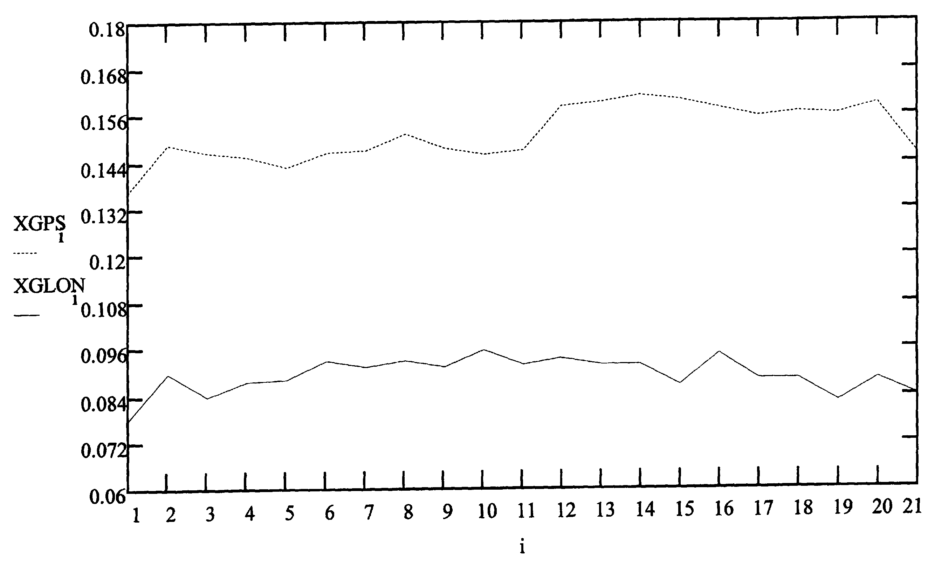

Figs. 8-11 show the dependence of the mean square error of the calculation, respectively, of the coordinates and velocity of the satellite using the simplified algorithm "I" (in an interval of 20 seconds) and the algorithm "II" (in an interval of 60 seconds) for the SRNS GPS and SRNS GLONASS satellites respectively. From the graphs it is clear that the calculation error for both simplified algorithms does not exceed 0.18 m by position and 0.3 cm/s by velocity thus satisfying the requirements for accuracy of both absolute and differential navigation.

The calculation of the velocity (**V**ₛ) of the SRNS GPS satellite at the nodal points, the calculation of the coordinates (**X**ₛ) and velocity (**V**ₛ) of the SRNS GLONASS satellite at the nodal points is effected using the formulas given below.

An example of calculation of the velocity of the SRNS GPS satellite. The velocity of the SRNS GPS satellite at the nodal points is calculated by the ephemeris data using the formulas:

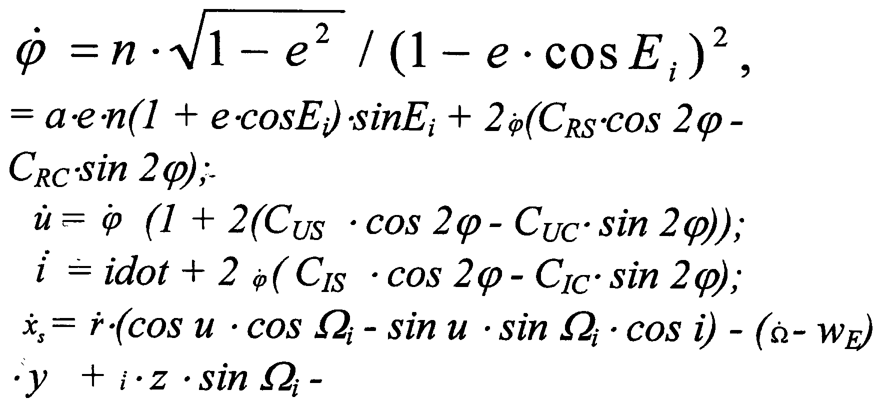

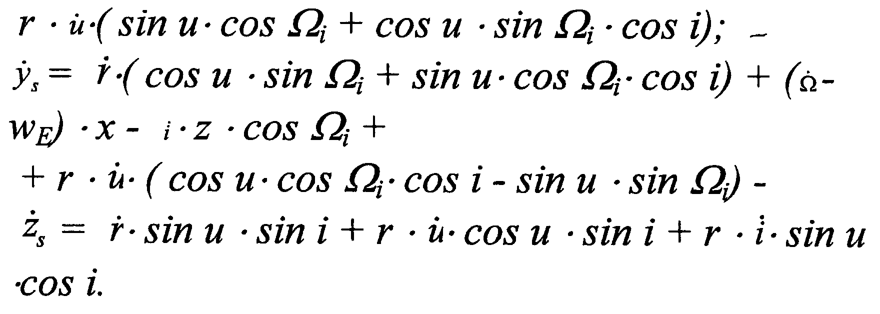

Here, like in the standard method of calculation of the coordinate of the SRNS GPS satellite, we have
***e*** is the eccentricity at the instant *t*_{*0e*}
Ω is the velocity of the precession of the rising node *t*_{*0e*}
***C***_{***RC***}**, *C***_{***Rs***} are the amplitudes of the cosine and sine corrections to the orbit radius.
***C***_{***UC***}**, *C***_{***US***} are the amplitudes of the cosine and sine corrections to the latitude
***I***_{***IC***}**, *C***_{***IS***} are the amplitudes of the cosine and sine corrections to the inclination
***indot*** is the rate of change of the inclination at the instant ***t***_{*0e*}
***w***_{***E***} = **7.2921151467** · **10**^{**-5**} is the earth angular velocity in rad/s, while the values **n, a, E**_{**i**}**,** ϕ, **i, u,** Ω_{**i**}**, r** are the intermediate results in the calculation of the SRNS GPS satellite using the standard method.

### The calculation of the coordinates and velocity of the SRNS GLONASS satellite.

The calculation of the coordinates and velocity of the SRNS GLONASS satellite by the ephemeredes at the nodal points is effected using the six-order Taylor polynomial expansion in two steps: calculation of the Taylor polynomial coefficients and determination of the coordinates and velocity.

### Step 1. Calculation of the Taylor polynomial coefficients

The input data: 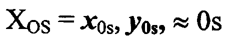
are the satellite coordinates at instant t₀ 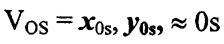
are the satellite coordinates at instant t₀
***t*** is the reference time of the GLONASS ephemeredes

The output data:
f₂,..., f₆ are the Taylor polynomial coefficients
***g***_{*3*}*,...,g*_{*6*}*,*
***m***_{***2***}***, m***_{***3***}***, m***_{***4***}
${\text{x}}^{̇}$₀_{*n*}, ${\text{y}}^{̇}$₀_{*n*} are the velocities *x*_{*0*}, *y*_{*0*} in the inertial system of coordinates
*c, d* are the parameters

Constants of PZ-90:
*R*_{*E*}= 6378136 m is the earth equatorial radius
*J*_{*2*} = 0.00108263 is the geopotential second zonal harmonic
µ = 3.9860044 · 10¹⁴ is the gravitational constant m³/c²
***w***_{***E***} is the earth angular velocity

The Taylor polynomial coefficient is calculated using the formulas:$\begin{matrix}\begin{matrix}\text{{} {\text{f}}_{\text{0}} \text{= 1,} {\text{f}}_{\text{1}} \text{= 0},} {\text{f}}_{\text{2}} \text{= -} \frac{\text{1}}{\text{2}} \text{+ 3·} \text{a} \text{·(5} {\text{b}}^{\text{2}} \text{- 1),} \\ {\text{f}}_{\text{3}} \text{= 10·} \text{a} \text{·} \text{b} \text{·} {{\text{z}}^{̇}}_{\text{0}} \text{+} {\text{r}}^{̇} \text{·(} \frac{\text{1}}{\text{2}} \text{+ 5·} \text{a} \text{·(1 - 7·} {\text{b}}^{\text{2}} \text{)) ,} \\ {\text{f}}_{\text{4}} \text{=} \frac{\text{1}}{\text{4}} \text{·} \text{u} \text{-} \frac{\text{5}}{\text{8}} \text{·} {{\text{r}}^{̇}}^{\text{2}} \text{+} \text{a} \text{·(} \frac{\text{5}}{\text{2}} \text{·} {{\text{z}}^{̇}}_{\text{0}}^{\text{2}} \text{-} {\text{b}}^{\text{2}} \text{·(} \frac{\text{35}}{\text{4}} \text{·} \text{V} \text{- 6·} \text{c} \text{) - 35·} {\text{r}}^{̇} \text{·} \text{b} \text{·} {\text{z}}^{̇} \text{),} \\ {\text{f}}_{\text{5}} \text{= -} \frac{\text{3}}{\text{4}} \text{·} {\text{r}}^{̇} \text{·} \text{u} \text{,} {\text{f}}_{\text{6}} \text{=} \frac{\text{11}}{\text{120}} \text{·} \text{c} \text{·(} \text{u} \text{+} \frac{\text{1}}{\text{2}} \text{·} \text{V} \text{) -} \frac{\text{1}}{\text{16}} \text{·} {\text{V}}^{\text{2}} \text{;} \\ \text{{} {\text{g}}_{\text{0}} \text{=0,} {\text{g}}_{\text{1}} \text{= 1,} {\text{g}}_{\text{2}} \text{= 0} ,} \\ {\text{g}}_{\text{3}} \text{=} \frac{\text{1}}{\text{3}} \text{·} {\text{f}}_{\text{2}} \text{,} {\text{g}}_{\text{4}} \text{=} \frac{\text{1}}{\text{2}} \text{·} {\text{f}}_{\text{3}} \text{,} {\text{g}}_{\text{5}} \text{=} \frac{\text{3}}{\text{5}} \text{·(} {\text{f}}_{\text{4}} \text{-} \text{c} \text{·} {\text{g}}_{\text{3}}^{\text{2}} \text{),} {\text{g}}_{\text{6}} \text{=} \frac{\text{2}}{\text{3}} \text{·} {\text{f}}_{\text{5}} \text{-} \text{c} \text{·} {\text{g}}_{\text{3}} \text{·} {\text{g}}_{\text{4}} \text{;} \\ \text{{} {\text{m}}_{\text{0}} \text{=} {\text{m}}_{\text{1}} \text{= 0},} \\ {\text{m}}_{\text{2}} \text{= 6·} \text{a} \text{,} {\text{m}}_{\text{3}} \text{= 10·} \text{a} \text{·} {\text{r}}^{̇} \text{,} {\text{m}}_{\text{4}} \text{=} \frac{\text{5}}{\text{2}} \text{·} \text{a} \text{·(} \text{V} \text{-} \frac{\text{4}}{\text{5}} \text{·} \text{c} \text{).}\end{matrix}\end{matrix}$ the velocities in the geocentric inertia system of coordinates:$\begin{matrix}\begin{matrix}{{\text{x}}^{̇}}_{\text{0}} {\text{}}_{\text{n}} \text{=} {{\text{x}}^{̇}}_{\text{0}} \text{-} {\text{w}}_{\text{E}} \text{·} {\text{y}}_{\text{0}} \text{,} \\ {{\text{y}}^{̇}}_{\text{0} \text{n}} \text{=} {{\text{y}}^{̇}}_{\text{0}} \text{+} {\text{w}}_{\text{E}} \text{·} {\text{x}}_{\text{0 ;}}\end{matrix}\end{matrix}$ the modulus of the radius-vector:$\text{d} \text{=} {\text{(x}}_{\text{0}} {}^{\text{2}} \text{+} {\text{y}}_{\text{0}} {}^{\text{2}} \text{+} {\text{z}}_{\text{0}} {}^{\text{2}} {\text{)}}^{\text{-} \text{1} \text{/} \text{2}}$ 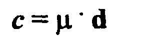 the square of the velocity vector:$\text{V} \text{=} {{\text{x}}^{̇}}_{\text{0} \text{n}}^{\text{2}} \text{+} {{\text{y}}^{̇}}_{\text{0} \text{n}}^{\text{2}} \text{+} {{\text{z}}^{̇}}_{\text{0}}^{\text{2}} \text{;} \text{;}$ the rate of change of the radius-vector:$\text{r} \text{=} \text{d} \text{·(} {\text{x}}_{\text{0}} \text{·} {{\text{x}}^{̇}}_{\text{0}} {\text{}}_{\text{n}} \text{+} {\text{y}}_{\text{0}} \text{·} {{\text{y}}^{̇}}_{\text{0} \text{n}} \text{+} {\text{z}}_{\text{0}} \text{·} {{\text{z}}^{̇}}_{\text{0}} \text{);}$ the coefficients:

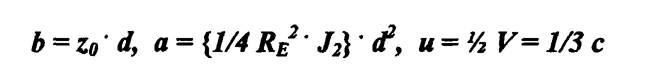

The Taylor polynomial coefficients:$\begin{matrix}\begin{matrix}\text{{} {\text{f}}_{\text{0}} \text{= 1,} {\text{f}}_{\text{1}} \text{= 0},} {\text{f}}_{\text{2}} \text{= -} \frac{\text{1}}{\text{2}} \text{+ 3·} \text{a} \text{·(5} {\text{b}}^{\text{2}} \text{- 1),} \\ {\text{f}}_{\text{3}} \text{= 10·} \text{a} \text{·} \text{b} \text{·} {{\text{z}}^{̇}}_{\text{0}} \text{+} {\text{r}}^{̇} \text{·(} \frac{\text{1}}{\text{2}} \text{+ 5·} \text{a} \text{·(1 - 7·} {\text{b}}^{\text{2}} \text{)),} \\ {\text{f}}_{\text{4}} \text{=} \frac{\text{1}}{\text{4}} \text{·} \text{u} \text{-} \frac{\text{5}}{\text{8}} \text{·} {{\text{r}}^{̇}}^{\text{2}} \text{+} \text{a} \text{·(} \frac{\text{5}}{\text{2}} \text{·} {{\text{z}}^{̇}}_{\text{0}} {\text{}}^{\text{2}} \text{-} {\text{b}}^{\text{2}} \text{·(} \frac{\text{35}}{\text{4}} \text{·} \text{V} \text{- 6·} \text{c} \text{) - 35·} {\text{r}}^{̇} \text{·} \text{b} \text{·} {\text{z}}^{̇} \text{) ,} \\ {\text{f}}_{\text{5}} \text{= -} \frac{\text{3}}{\text{4}} \text{·} {\text{r}}^{̇} \text{·} \text{u} \text{,} {\text{f}}_{\text{6}} \text{=} \frac{\text{11}}{\text{120}} \text{·} \text{c} \text{·(} \text{u} \text{+} \frac{\text{1}}{\text{2}} \text{·} \text{V} \text{) -} \frac{\text{1}}{\text{16}} \text{·} {\text{V}}^{\text{2}} \text{;} \\ \text{{} {\text{g}}_{\text{0}} \text{= 0,} {\text{g}}_{\text{1}} \text{= 1,} {\text{g}}_{\text{2}} \text{= 0},} \\ {\text{g}}_{\text{3}} \text{=} \frac{\text{1}}{\text{3}} \text{·} {\text{f}}_{\text{2}} \text{,} {\text{g}}_{\text{4}} \text{=} \frac{\text{1}}{\text{2}} \text{·} {\text{f}}_{\text{3}} \text{,} {\text{g}}_{\text{5}} \text{=} \frac{\text{3}}{\text{5}} \text{·(} {\text{f}}_{\text{4}} \text{-} \text{c} \text{·} {\text{g}}_{\text{3}} {\text{}}^{\text{2}} \text{),} \\ {\text{g}}_{\text{6}} \text{=} \frac{\text{2}}{\text{3}} \text{·} {\text{f}}_{\text{5}} \text{-} \text{c} \text{·} {\text{g}}_{\text{3}} \text{·} {\text{g}}_{\text{4}} \text{;} \\ \text{{} {\text{m}}_{\text{0}} \text{=} {\text{m}}_{\text{1}} \text{= 0},} \\ {\text{m}}_{\text{2}} \text{= -6·} \text{a} \text{,} {\text{m}}_{\text{3}} \text{= 10·} \text{a} \text{·} {\text{r}}^{̇} \text{,} {\text{m}}_{\text{4}} \text{=} \frac{\text{5}}{\text{2}} \text{·} \text{a} \text{·(} \text{V} \text{-} \frac{\text{4}}{\text{5}} \text{·} \text{c} \text{).}\end{matrix}\end{matrix}$

### Step 2 The. calculation of the coordinates and velocities

The input data: 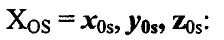
are the satellite coordinates at instant t₀ 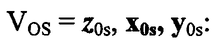
are the satellite coordinates at instant t₀ in the inertia system of coordinates
*t*₀ is the reference time of the GLONASS ephemeredes *ẍ*_{0*s*}, *ÿ*_{0*s*}, *z̈*_{0*s*} are the acceleration by the Moon and Sun at the instant *t*
*f*₂,...,*f*₆ are the coefficients at the instant *t*₀
*g*₃,...,*g*₆,
*m*₂, *m*₃, *m*₄
*c*, *d* are the parameters at the instant *t*_{*0*}
*t* is the preset time
τ_{*p*} is the time of propagation of the signal
   - τ_{*0*}, γ₀: is the difference between the GLONASS system time and the satellite time at the instant *t*_{*0*}

The output data: 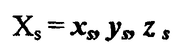 are the satellite coordinates at the instant *t* 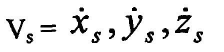 are the satellite velocity at the instant *t*
- ***a***_{*1*}, ***a***_{*2*}: is the difference between the GLONASS time scale and the satellite time scale at the instant *t*

The position of the SRNS GLONASS satellite is calculated by the formulas:
the prediction interval: $\text{Δ} \text{t} \text{=} {\text{t}}_{\text{y}} \text{-} {\text{t}}_{\text{0}}$ ;
the coefficients for calculation of the coordinates: 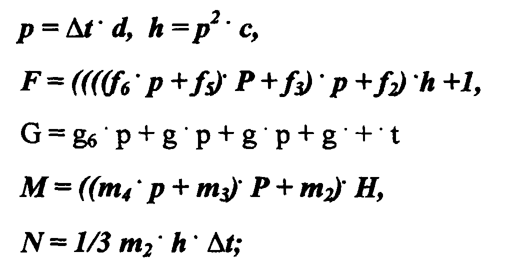
the coefficients for calculation of the velocities: 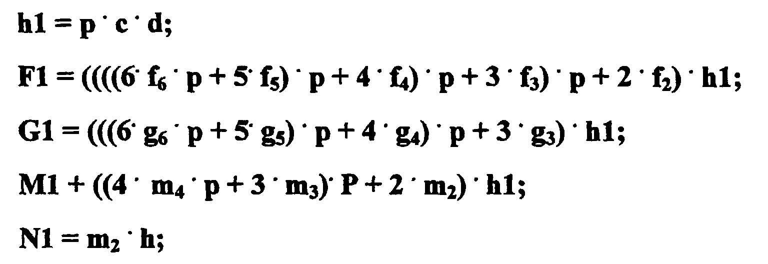
the time parameter: ${\text{ε = ½ Δt}}^{\text{2}}$;
the coordinates and the velocities in the geocentric inertia system of coordinates:$\begin{matrix}\begin{matrix}{\text{x}}_{\text{1}} \text{=} \text{F} \text{·} {\text{x}}_{\text{0} \text{s}} \text{+} \text{G} \text{·} {{\text{x}}^{̇}}_{\text{0} \text{n}} \text{+ ε·} {{\text{x}}^{¨}}_{\text{0} \text{s}} \\ {\text{y}}_{\text{1}} \text{=} \text{F} \text{·} {\text{y}}_{\text{0} \text{s}} \text{+ G·} {{\text{y}}^{̇}}_{\text{0} \text{n}} \text{+ ε·} {{\text{y}}^{¨}}_{\text{0} \text{s}} \text{,} \\ {{\text{x}}^{̇}}_{\text{1}} \text{=} \text{F} \text{1·} {\text{x}}_{\text{0} \text{s}} \text{+} \text{G} \text{1·} {{\text{x}}^{̇}}_{\text{0} \text{n}} \text{+ Δ} \text{t} \text{·} {{\text{x}}^{¨}}_{\text{0} \text{s}} \\ {{\text{y}}^{̇}}_{\text{1}} \text{=} \text{F} {\text{1·y}}_{\text{0} \text{s}} \text{+} \text{G} \text{1·} {{\text{y}}^{̇}}_{\text{0}} {\text{}}_{\text{n}} \text{+ Δ} \text{t} \text{·} {{\text{y}}^{¨}}_{\text{0} \text{s}} \text{;}\end{matrix}\end{matrix}$
the revolution coefficient:$\begin{matrix}\begin{matrix}{\text{s = sin(w}}_{\text{E}} \text{· (Δ} \text{t} {\text{+ τ}}_{\text{p}} \text{))} \\ {\text{k = cos(w}}_{\text{E}} \text{· (Δ} \text{t} {\text{+ τ}}_{\text{p}} \text{))}\end{matrix}\end{matrix}$

The Greenwich geocentric coordinates and velocities:$\begin{matrix}\begin{matrix}{\text{x}}_{\text{s}} \text{=} {\text{x}}_{\text{1}} \text{·} \text{k} \text{+} {\text{y}}_{\text{1}} \text{·} \text{s} \\ {\text{y}}_{\text{s}} \text{= -} {\text{x}}_{\text{1}} \text{·} \text{s} \text{+} {\text{y}}_{\text{1}} \text{·} \text{k} \text{;} \\ {\text{z}}_{\text{s}} \text{= (} \text{F} \text{+} \text{M} \text{)·} {\text{z}}_{\text{0} \text{s}} \text{+ (} \text{G} \text{+} \text{N} \text{)·} {{\text{z}}^{̇}}_{\text{0} \text{s}} \text{+ ε·} {{\text{z}}^{¨}}_{\text{0} \text{s}} \text{;} \\ {{\text{x}}^{̇}}_{\text{s}} \text{=} {{\text{x}}^{̇}}_{\text{1}} \text{·} \text{k} \text{+} {{\text{y}}^{̇}}_{\text{1}} \text{·} \text{s} \text{+} {\text{w}}_{\text{E}} \text{·} {\text{y}}_{\text{s}} \\ {{\text{y}}^{̇}}_{\text{s}} \text{= -} {{\text{x}}^{̇}}_{\text{1}} \text{·} \text{s} \text{+} {{\text{y}}^{̇}}_{\text{1}} \text{·} \text{k} \text{-} {\text{w}}_{\text{E}} \text{·} {\text{x}}_{\text{s}} \\ {{\text{z}}^{̇}}_{\text{s}} \text{= (} \text{F} \text{1 +} \text{M} \text{1)·} {\text{z}}_{\text{0} \text{s}} \text{+ (} \text{G} \text{1 +} \text{N} \text{1)·} {{\text{z}}^{̇}}_{\text{0} \text{s}} \text{+ Δ} \text{t} \text{·} {{\text{z}}^{¨}}_{\text{0} \text{s}} \text{.}\end{matrix}\end{matrix}$

The correction for the earth rotation for the algorithm "II" is not taken into account in the calculation of the velocities.

The calculation of the acceleration of the SRNS GPS or GLONASS satellite at the nodal points and the simplified algorithm "I" for the calculation of the coordinates and velocities of the SRNS GPS or GLONASS satellite at an arbitrary instants of time within the interval limited by the nodal points is effected according to the formulas given below.

An example of the acceleration calculation. The acceleration is taken constant within the whole 24-second interval. The acceleration vector is calculated for the center of the 20-second interval using the formula:${{\text{p}}^{¨}}_{\text{s}} \text{(} {\text{t}}_{\text{y} \text{-1}} \text{+ 10} \text{c} \text{) =} \frac{{{\text{p}}^{̇}}_{\text{s}} \text{(} {\text{t}}_{\text{y}} \text{)-} {{\text{p}}^{̇}}_{\text{s}} \text{(} {\text{t}}_{\text{y} \text{-1}} \text{)}}{\text{20} \text{c}} \text{where} \text{p} \text{⊂ {} \text{x, y, z} \text{}}$

An example of calculation of the satellite coordinates and velocities. The position and velocity of the SRNS GPS, GLONASS satellite at any random instant of time within the 20-second interval are c are calculated from the nearest nodal point using the formula:

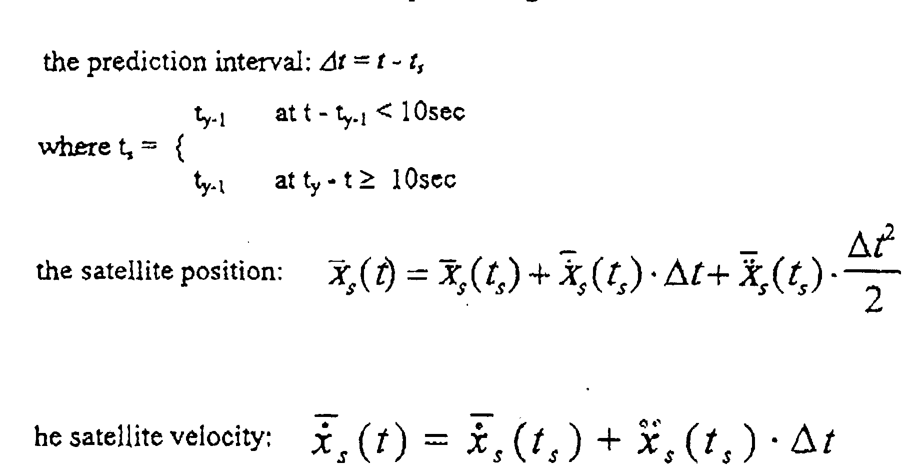

The simplified algorithm "II" of calculation of the coordinates and velocity of the SRNS GPS or GLONASS satellite at random instants of time within the interval restricted by the nodal points is effected using the formulas given below.

An example of calculation of the third-order Taylor polynomial. The calculation of the coefficients of the Taylor polynomial is performed using the formulas:
the modulus of the radius-vector: $\text{d} \text{= (} {\text{x}}_{\text{s}} {}^{\text{2}} \text{+} {\text{y}}_{\text{s}} {}^{\text{2}} \text{+} {\text{y}}_{\text{s}} {}^{\text{2}} {\text{)}}^{\text{1/2}}$
the coefficients: $\text{b} \text{=} {\text{z}}_{\text{s}} \text{·} \text{d} \text{,} \text{a} \text{=} {\text{{1/4 · R}}_{\text{E}} {}^{\text{2}} \text{·} {\text{J}}_{\text{2}} \text{}} \text{·} {\text{d}}^{\text{2}}$;
the modulus of the radius-vector: $\text{d} \text{=} {\text{(x}}_{\text{s}} {}^{\text{2}} \text{+} {\text{y}}_{\text{s}} {}^{\text{2}} \text{+} {\text{y}}_{\text{s}} {}^{\text{2}} {\text{)}}^{\text{1/2}}$
the coefficients: $\text{b} \text{=} {\text{z}}_{\text{s}} \text{·} \text{d,a} \text{=} {\text{{1/4 · R}}_{\text{E}} {}^{\text{2}} {\text{· J}}_{\text{2}} \text{}} \text{·} {\text{d}}^{\text{2}}$;
the Taylor polynomial coefficients: ${\text{f = {-1/2 + 3 · a(5b}}^{\text{2}} {\text{- 1)}µ · d}}^{\text{3}}$, $\text{g = f/3}$.

### An example of calculation of the NCA coordinates and velocities

The position and velocity for the SRNS GPS, GLONASS satellite at any arbitrary instant of time within the 60-second interval are calculated from the nearest nodal point using the formulas:
the prediction interval: $\text{Δ} \text{t} \text{=} \text{t} \text{-} {\text{t}}_{\text{s}} \text{;}$
the coefficients for the coordinates : $\text{F} \text{=} \text{1} \text{+} \text{f} \text{· Δ} {\text{t}}^{\text{2}} \text{;}$$\text{G} \text{=} \text{(1} \text{+} \text{g} \text{· Δ} {\text{t}}^{\text{2}} \text{) · Δ} \text{t}$
the coefficients for the velocities : $\text{F1 = 2 · f · Δ} \text{t} \text{= 1 + f ·Δt; G1 = F}$;
the coordinates and velocities in the geocentric inertia system of coordinates:$\begin{matrix}\begin{matrix}{\text{x}}_{\text{1}} \text{=} \text{F} \text{·} {\text{x}}_{\text{s}} \text{+} \text{G} \text{·} {{\text{x}}^{̇}}_{\text{s}} {{\text{x}}^{̇}}_{\text{1}} \text{=} \text{F} \text{1·} {\text{x}}_{\text{s}} \text{+} \text{G} \text{1·} {{\text{x}}^{̇}}_{\text{s}} \\ {\text{y}}_{\text{1}} \text{=} \text{F} \text{·} {\text{y}}_{\text{s}} \text{+} \text{G} \text{·} {{\text{y}}^{̇}}_{\text{s}} {{\text{y}}^{̇}}_{\text{1}} \text{=} \text{F} \text{1·} {\text{y}}_{\text{s}} \text{+} \text{G} \text{1·} {{\text{y}}^{̇}}_{\text{s}}\end{matrix}\end{matrix}$
the coefficient of turn: $\text{s} \text{=} {\text{sin ( w}}_{\text{E}} \text{(Δ} \text{t} {\text{+ τ}}_{\text{p}} \text{))}$${\text{k = 1 - s}}^{\text{2}} \text{/2}$
the Greenwich geocentric coordinates and velocities:$\begin{matrix}\begin{matrix}{\text{x}}_{\text{s}} \text{=} {\text{x}}_{\text{1}} \text{·} \text{k} \text{+} {\text{y}}_{\text{1}} \text{·} \text{s} \text{;} \\ {\text{y}}_{\text{s}} \text{= -} {\text{x}}_{\text{1}} \text{·} \text{s} \text{+} {\text{y}}_{\text{1}} \text{·} \text{k} \text{;} \\ {\text{z}}_{\text{s}} \text{=} \text{F} \text{·} {\text{z}}_{\text{s}} \text{+} \text{G·} {{\text{z}}^{̇}}_{\text{s}} \\ {\text{x}}_{\text{s}} \text{=} {\text{x}}_{\text{1}} \text{·} \text{k} \text{+} {\text{y}}_{\text{1}} \text{·} \text{s} \text{+} {\text{w}}_{\text{E}} \text{·} {\text{y}}_{\text{s}} \text{;} \\ {\text{y}}_{\text{s}} \text{= -} {\text{x}}_{\text{1}} \text{·} \text{s} \text{+} {\text{y}}_{\text{1}} \text{·} \text{k} \text{-} {\text{w}}_{\text{E}} \text{·} {\text{x}}_{\text{s}} \text{;} \\ {\text{z}}_{\text{s}} \text{=} \text{F} \text{1·} {\text{z}}_{\text{s}} \text{+} \text{G} \text{1·} {\text{z}}_{\text{s}} \text{.}\end{matrix}\end{matrix}$

The above-discussed computational algorithms providing a prediction determination of the position of SRNS satellite on the orbit by the ephemeredes are realized by means of standard computers.

From the above it is clear that the claimed invention is industrially applicable and attains the technical object on reducing the computational cost and saves time (from a factor of three to ten) when determine the path of the SRNS satellite due to the use of a combined (two-step) process of determining the path of the satellite, in which the standard algorithm is used in the calculation of only definite nodal points of the satellite path: once in some time interval, while the intermediate points within this interval are calculated by a simplified procedure using simple polynomial formulas, the coefficients for which are calculated at the first step of application of the standard computational algorithm - by the position and velocity of the satellite at the nodal points. The claimed invention is very promising, especially in small-size (portable, pocket) SRNS GPS and/or GLONASS receivers.
1. ROG Andrey L. 17-1-17, Otkrytoe shosse, 107143, Moscow, Russian Federation
2. KAKOSHKINA Natalia P. 21, Nastavnikov lane, apt. 9, 195030, Saint-Petersburg, Russian Federation
3. IVANOV Vladimir N. 9, Perevoznyi per., apt. 85, 195297, Saint-Petersburg, Russian Federation
4. TZEKHANOVICH Guennady S. 173, Nar. Opolcheniya str., apt. 49, 198260, Saint-Petersburg, Russian Federation
5. MALASHIN Viktor I. 44, Nauki prospect, apt 336, 195273, Saint-Petersburg, Russian Federation
6. PISAREV Serguey B. 12, Krasnoputilovskaya str., apt.22, 198152, Saint-Petersburg, Russian Federation
7. POVERENNYI Denis G. 91, Suzdalskyi lane, apt. 3, 195297, Saint-Petersburg, Russian Federation
8. SHEBSHAEVICH Boris V. 104, Moyka-river emb., apt. 3, 190121, Saint-Petersburg, Russian Federation
9. SILIN Mikhail Yu. 3/1-2, Semenovskaya nab., apt. 49, 105094, Moscow, Russian Federation

## Claims

1. A method for determining the coordinates of the satellite of a satellite radio navigation system on the orbit by the ephemeredes consisting that the ephemeredes known a priori at the initial instant of time are used for determining the extrapolated coordinates of the satellite on the orbit in a sequential series of arbitrary points, *characterized in that* the coordinates of the satellite are determined at preset nodal points of the orbit spaced from each other by a selected time interval, in so doing the satellite velocities are additionally determined at the nodal points/ while at the points between the nodal points the coordinates of the satellite are determined in the geocentric inertial system of coordinates, using the computational algorithm by the following formulas:$\begin{matrix}\begin{matrix}{\text{x}}_{\text{1}} \text{=} \text{F} \text{·} {\text{x}}_{\text{s}} \text{+} \text{G} \text{·} {{\text{x}}^{̇}}_{\text{s}} \\ {\text{y}}_{\text{1}} \text{=} \text{F} \text{·} {\text{y}}_{\text{s}} \text{+} \text{G} \text{·} {{\text{y}}^{̇}}_{\text{s}}\end{matrix}\end{matrix}$ and the coefficients for calculation of the coordinates are found from the formulas:${\text{F = 11 + Δt; G = (1 + g ·Δt}}^{\text{2}} \text{) · Δt,}$ where Δt is the prediction interval.

2. The method according to claim 1, *characterized in that* the computational algorithm of the six-order Taylor polynomial is used for determining the coordinates and velocities of the satellite of the satellite radio navigation system at the nodal points of the orbit.

3. The method according to claim 1, *characterized in that* the computational algorithm of the second-order or third-order Taylor polynomial is used for determining the coordinates of the satellite at the intermediate points of the orbit.

4. The method for determining the coordinates of the satellite of a satellite radio navigation system on the orbit by the ephemeredes consisting that the ephemeredes known a priori at the initial instant of time are used for determining the extrapolated coordinates of the satellite on the orbit in a sequential series of arbitrary points, *characterized in that* the coordinates of the satellite are determined at preset nodal points of the orbit spaced from each other by a selected time interval, in so doing the satellite velocities are additionally determined at the nodal points, while at the points between the nodal points the coordinates of the satellite are determined in the Greenwich geocentric coordinates, using the computational algorithm by the following formulas:$\begin{matrix}\begin{matrix}{\text{x}}_{\text{s}} \text{=} {\text{x}}_{\text{1}} \text{·} \text{k} \text{+} {\text{y}}_{\text{1}} \text{·} \text{s} \text{;} \\ {\text{y}}_{\text{s}} \text{= -} {\text{x}}_{\text{1}} \text{·} \text{s} \text{+} {\text{y}}_{\text{1}} \text{·} \text{k} \text{;} \\ {\text{z}}_{\text{s}} \text{=} \text{F} \text{·} {\text{z}}_{\text{s}} \text{+} \text{G} \text{·} {{\text{z}}^{̇}}_{\text{s}} \text{;}\end{matrix}\end{matrix}$ where the coefficients of turn *k* and *s* have the following values:$\begin{matrix}\begin{matrix}\text{s = sin (} {\text{w}}_{\text{E}} {\text{· (Δt + τ}}_{\text{p}} \text{))} \\ \text{k = cos (} {\text{w}}_{\text{E}} {\text{· (Δt + τ}}_{\text{p}} \text{))}\end{matrix}\end{matrix}$ in which case the coefficients for calculation of the coordinates are calculated using the formulas:${\text{F = 1 + f · Δt; G = (1 + g · Δt}}^{\text{2}} \text{) · Δt,}$ where Δt is the interval of prediction.

5. The method according to claim 4, *characterized in that* the coordinates and velocity of the satellite of the satellite radio navigation system at the nodal points of the orbit are determined using the computational algorithm of the sixth-order Taylor polynomial.

6. The method according to claim 4, *characterized in that* the second-order or third-order Taylor polynomial is used for determining the coordinates of the satellite at the intermediate points of the orbit.
